# EUROPEAN PATENT APPLICATION

(11) **EP 1 367 526 A2**
(43) Date of publication of application: **03.12.2003**
(21) Application number: 03076695.0
(22) Date of filing: 30.05.2003
(51) Int. Cl.: G06K 7/10

(54) **Code reader**

(30) Priority: 30.05.2002 JP 2002195252
(71) Applicant: Aisin Engineering Co Ltd, Kariya, Aichi (JP)
(72) Inventor: Okada, Tohru, Togo-cho, Aichi-gun, Aichi (JP)
(74) Representative: SERJEANTS

(57) **Abstract**

A code reader includes a housing, a reading portion, provided on the housing, for reading a unique code provided on an object, a device, provided in the housing, for illuminating the code, a device, provided in the housing, for capturing an image of the unique code, the device for illuminating the code being irradiating a light to the unique code for reading information of the unique code by a reflection light reflected from the unique code, and a light transmission member, provided between the device for capturing the image and the reading portion, for introducing the light, generated by the device for illuminating the code, diffusing therein.

## Description

### FIELD OF THE INVENTION

The present invention relates to a code reader. More specifically, the present invention pertains to an internal construction of a code reader for reading a unique or identical code (i.e., unique information such as one dimensional code, a two dimensional code, a three dimensional code, and a hybrid multi-dimensional code combining different codes that show the unique information for an object) based on a reflection of irradiated light reflecting the unique code by irradiating the light from a light source relative to the unique code provided on the object.

### BACKGROUND OF THE INVENTION

In order to control particular objects (e.g., products) each object is provided with a unique code (e.g., a one dimensional code or two dimensional code showing the information identifying the product) for differentiating each product. By reading the unique code provided on the particular product with a code reader the product is comprehensively controlled.

A code reader is described in Japanese Patent Laid-Open Publication No. 2000-29979. The code reader described in Japanese Patent Laid-Open Publication No. 2000-29979 includes light source provided facing opposite side from an opening of a hood portion for performing code reading of two-dimensional code. A surface to be read provided with the two-dimensional code is irradiated with the indirect illumination. The reflective light reflected from the two-dimensional code is detected by a two-dimensional sensor via a lens.

Another code reader is described in Japanese Patent No. 2780146. With the code reader described in Japanese Patent No. 2780146, a lens, a sensor, and light sources are accommodated in a body case. A light entrance diaphragm mechanism is provided on a reading side of the lens, the light source is irradiated to a surface of the light entrance diaphragm mechanism, and a surface of an incident light diaphragm has camouflaged color (i.e., the surface has a color that reflects like, for example, white) which enables the diffusion of the light.

Notwithstanding, with the code reader described in Japanese Patent Laid-Open Publication No. 2000-29979 in which the surface to be read is illuminated by the indirect illumination, the strength of light is attenuated during the process of light reflection, thus the luminance on the surface to be read is somewhat declined compared to the luminance of the light source to be darker. In this case, in order to brightly illuminate the surface to be read, light sources with high luminance has to be employed or the output has to be improved by changing a drive circuit of the light source. This leads drawbacks increasing the manufacturing cost and complicating the construction of the code reader.

The light entrance diaphragm mechanism is coated with the paint such as white so that the light entrance diaphragm mechanism has the camouflaged color with, for example, white, for performing the indirect illumination by effectively reflecting the light from the light source with the light entrance diaphragm mechanism in Japanese Patent No. 2780146. With the coating with white color, the white color may become yellowish by the secular change. In other words, when the color of the light entrance diaphragm mechanism becomes yellowish by the secular change, the reflection rate is declined compared to the white color, thus to decline the luminance at the surface to be read.

A need thus exists for a code reader which effectively reads a unique code without declining the luminance of the light from a light source.

### SUMMARY OF THE INVENTION

In light of the foregoing, the present invention provides a code reader which includes a housing, a reading portion, provided on the housing, for reading a unique code provided on an object, means, provided in the housing, for illuminating the code, means, provided in the housing, for capturing an image of the unique code, the means for illuminating the code being irradiating a light to the unique code for reading information of the unique code by a reflection light reflected from the unique code, and a light transmission member, provided between the means for capturing the image and the reading portion, for introducing the light, generated by the means for illuminating the code, diffusing therein.

According to another aspect of the invention, a code reader includes a housing, a reading portion, provided on the housing, for reading a unique code provided on an object, a light source provided in the housing and configured to illuminate the unique code, a CCD camera provided in the housing for capturing an image of the unique code, the light source irradiating a light to the unique code for reading information of the unique code by a reflection light reflected from the unique code, and a light transmission member provided between the CCD camera and the reading portion for introducing the light, generated by the light source, diffusing therein.

### BRIEF DESCRIPTION OF THE DRAWING FIGURES

The foregoing and additional features and characteristics of the present invention will become more apparent from the following detailed description considered with reference to the accompanying drawing figures in which like reference numerals designate like elements.
Fig. 1 is an overview showing a configuration of a code reader according to an embodiment of the present invention.
Fig. 2 is a cross-sectional view on right hand of x-y plane surface of the code reader shown in Fig. 1.
Fig. 3 is a cross-sectional view on left hand of x-y plane surface of the code reader shown in Fig. 1
Fig. 4 is a cross-sectional view of x-z plane surface of a hood portion shown in Fig. 1.
Fig. 5 is a view showing an internal construction viewed from a back removed with a housing from the code reader shown in Fig. 1.

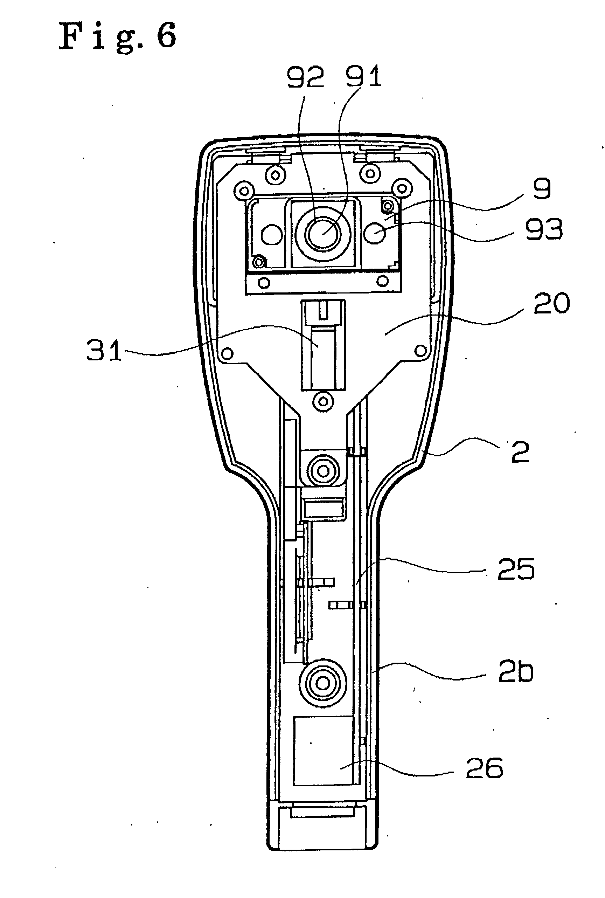

Fig. 6 is a view showing an internal construction of the code reader removed with a main board and an optical board from Fig. 5.
Fig. 7 is a back view of the housing of the core reader shown in Fig. 1.
Fig. 8 is a side view showing a construction of an illumination unit provided in the code reader shown in Fig. 1.
Fig. 9 is a cross-sectional view in the x-y direction showing an internal construction of the illumination unit shown in Fig. 8.
Fig. 10 is an explanatory view for explaining a reading range when performing the reading of the unique code with the code reader shown in Fig. 2.
Fig. 11 is a view showing a configuration of a two-dimensional code provided on an object shown in Fig. 10.
Fig. 12 is an explanatory view showing the light irradiated from the illumination unit to a surface to be read shown in Fig. 4.

### DETAILED DESCRIPTION OF THE INVENTION

An embodiment of a code reader according to the present invention will be explained with reference to the illustrations of the drawing figures.

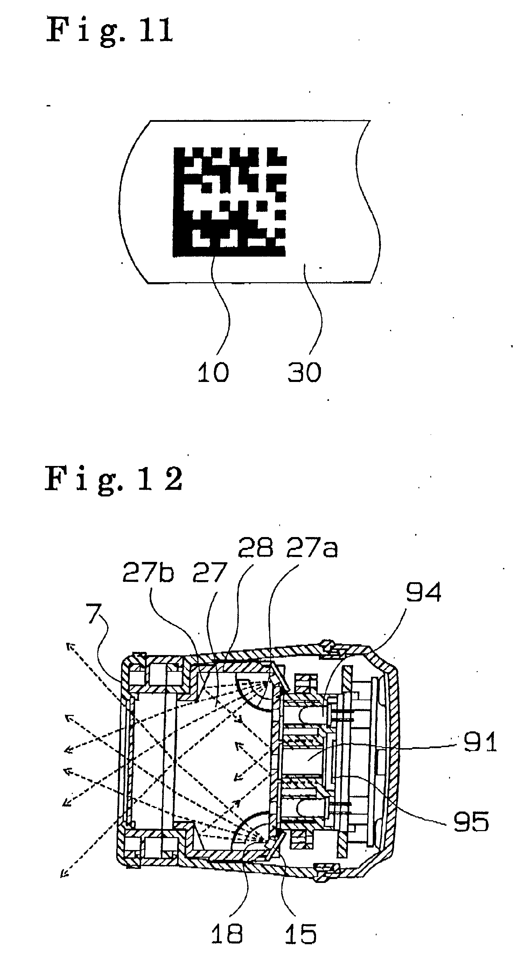

A code reader 1 is configured to read the information unique to an object 30 (Fig 11) from a code 10 (e.g., one dimensional code, two dimensional code, three dimensional code, or multi-dimensional code combined with different codes hereinafter referred to as a code) by providing the unique code 10 directly or indirectly on the object in order to identify the particular object 30 among the plural objects made of metal, rubber, ceramic, and resin, or the like. With the code reader according to this non-limiting embodiment, a two dimensional code is applied and the code reader 1 for reading the information shown with the two-dimensional code will be explained.

The code is not limited to the two-dimensional code, and members printed or inscribed with one dimensional code, three dimensional code, or multi-dimensional code represented as a barcode are applicable to a device for reading the code (i.e., more specifically, the information shown with the code) 10 by the reflective wave of the light reflected from the code 10 by irradiating the light from the inside of the code reader 1 to the particular portion having the unique code 10.

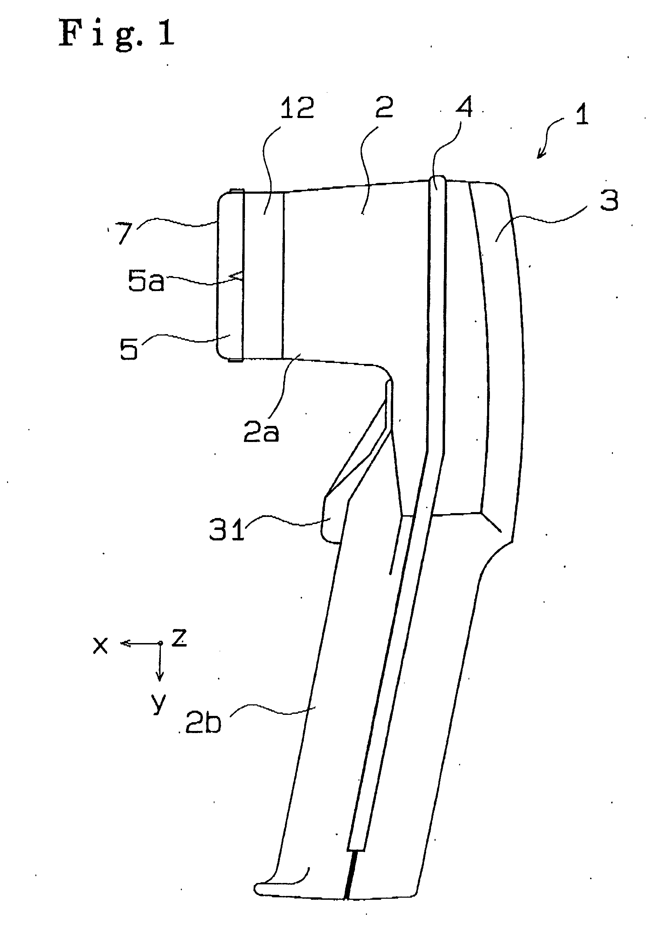

In the following description, an optical axis perpendicular to a CCD (charge coupled device) element included in a CCD camera 95 and lens group 91 is referred to as the X-axis. A vertical axis (as illustrated in Fig. 1) perpendicular to the X-axis is referred to as the Y-axis, and a horizontal axis perpendicular to the X-axis and to the Y-axis is referred to as the Z-axis. Further, the code reader 1 is described in the orientation shown in Fig. 1 so that the top of Fig. 1 is referred to as the top of the code reader, the bottom of Fig. 1 is referred to as the bottom of the code reader 1, and the right side of Fig. 1 is referred to as the back surface of the code reader 1.

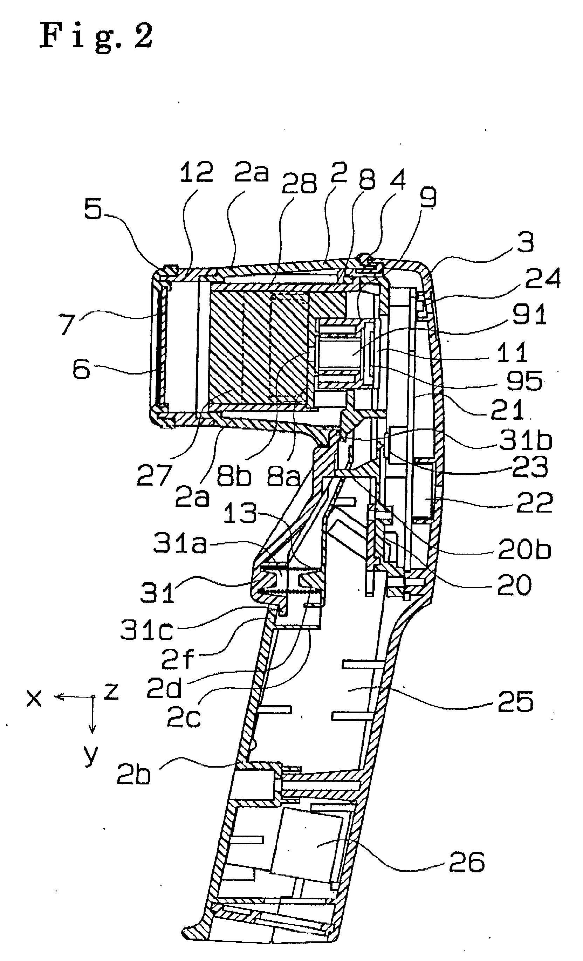

As shown in the non-limiting illustration of Figs. 1 and 2, the code reader 1 includes a first housing part 2 and a second housing part 3 made of resin or the like. Non-limiting examples of a suitable material include ABS resin and urethane. The first housing part 2 is formed with an opening on the back surface (i.e., right side of Fig. 1) and the opening is covered with the second housing part 3 having a recessed configuration. The top of the reader of the first housing part 2 is unitarily formed with a hood portion 2a having an approximately rectangular configuration projected in the X-direction. A grip portion 2b is formed to be extended slightly tilted from the Y-axis shown in Fig. 1 in the acute angle from the hood portion 2a of the first housing part 2. The first and the second housing parts 2-3 may be assembled for covering the openings formed respectively and may fixed to each other with tightening members such as screws or the like.

The code reader 1 includes an operation lever 31, provided between the hood portion 2a and the grip portion 2b of the housing part 2, rotatable about the Z-axis. By the operation of the operation lever 31 by a user, the code reader 1 is activated to read the code 10 provided on the object 30.

When the first and the second housing parts 2, 3 are assembled and fixed together, a slip stopper 4 made of, for example, rubber or elastomer or the like may be provided, and may be configured to correspond to the opening configurations of the housing parts 2, 3. The slip stopper 4 is secured to the first and the second housing parts 2, 3, along the configuration of the opening end portions of the housing parts 2, 3 provided between the housing parts 2, 3. The slip stopper 4 prevents the slip of a hand from the grip portion 2b when the user operates the operation lever 31 of the code reader 1 for reading the code 10.

Referring to Fig. 2, the internal construction of the code reader 1 and positions of parts will be explained. The hood portion 2a of the housing part 2 opens in the X-direction. An adjusting member 12 for optically adjusting the reading distance is fitted at an end of the opening of the hood portion 2a. The adjusting member 12 includes a configuration the same with the end of the opening of the hood portion 2a and may be made of the same material as the housing part 2. A hood cover (cap) 5 including a light permeation plate, for example, transparent or semi-transparent glass or plastic or the like processed as the optical filter, having the optical filter function for cutting the ultraviolet rays and infrared rays, is provided on a tip end of the adjusting member 12. The hood cover 5 made of rubber or elastomer or the like is provided on one end of the adjusting member 12 provided on the hood portion 2a along the configuration of the opening of the adjusting member 12 corresponding to the opening of the hood portion 2a.

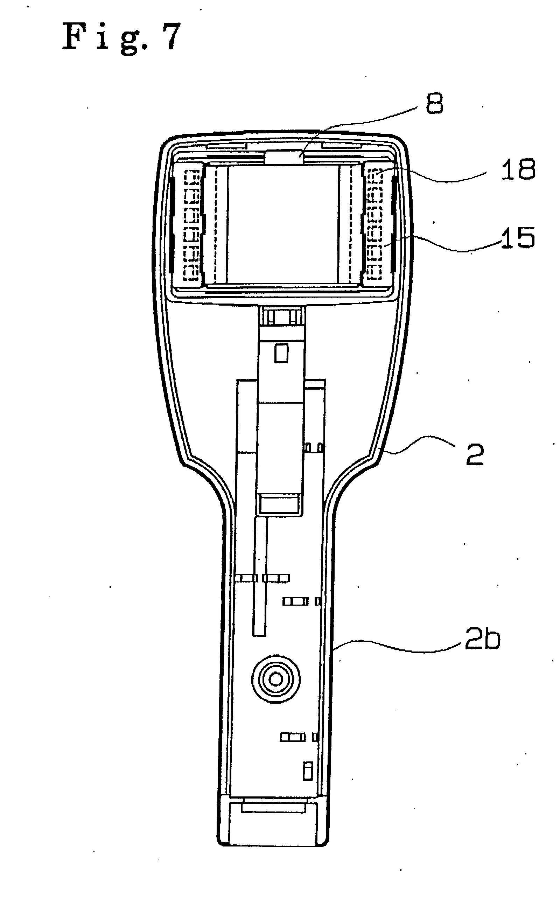

Four position determination portions 5a (Fig. 1)for facilitating the positioning in the Y-direction and the Z-direction between the code 10 and a surface to be read of the code 10 may be formed unitarily on the hood cover 5. The position determination portion 5a has a triangular configuration at the center in the Y-direction and the Z-direction of the hood cover 5. The hood cover 5 is generally rectangular (see Fig. 7). A surface covered with the hood cover 5 corresponds to a reading portion 7 for reading the code 10 and a surface to be read for reading the code 10 is located outside from the reading portion 7. In the hood portion 2a, an illumination unit 8 configured to illuminate the surface to be read may be provided in an inner part of the reading portion 7.

The illumination unit 8 having a box shape with a bottom may be made of resin. The illumination unit 8 includes at least one light source therein for illumination (LED for illumination) 18 for illuminating the entire illumination unit by irradiating the colored light (e.g., red) when reading the code. The illumination unit 8 includes a light transmission member 27, being excelled in forthrightness of the light without fluid distortion, which may be made of glass or transparent resin (for example acrylic resin) therein. The light source 18 for the illumination having a predetermined irradiation angle (e.g., 60 degrees) configured to irradiate the light from the diagonal direction to the light axis X is provided on opposite sides of the rectangular shaped illumination unit 8 (see Fig. 12).

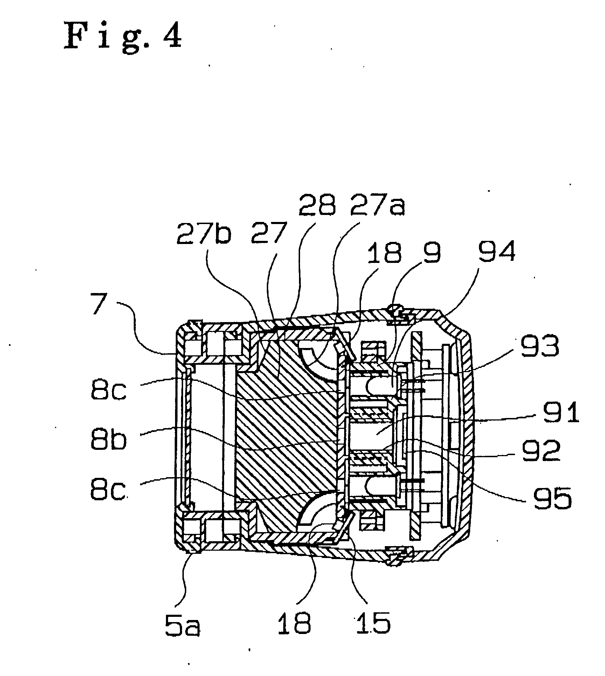

The light transmission member 27 may be formed by cutting the transparent rectangular block and grinding the surface thereof as shown in Fig. 4. Two curved recess portions each extended in the Y-direction are formed on opposite sides of the back surface of the light transmission member 27 spaced apart from one another in the Z-direction. The curved recess portions correspond to lens portions 27a for expanding the irradiated light from the light source 18 for the illumination to have diffused angle relative to the inside of the light transmission member. At the fron tog the light transmission member 27 two flat portions extended in the Y-direction are formed, one on each side of the light transmission member 27 and mutually spaced apart in the Z-direction. The flat portions optically function as reflection surfaces 27b. A light reflection membrane 28 is provided over an external peripheral surface of the light transmission member 27 except for the end faces of the light transmission member 27 facing in the X-direction and the lens portions 27a.

Three optical apertures 8b, 8c, 8c are provided on the back surface of the light transmission member 27 in the X-direction. A white screen printing is provided across the whole of the back surface of the light transmission member 27 except for the optical apertures 8b, 8c, 8c. The light reflection membrane 28 provided surrounding the light transmission member 27 is provided for reducing the unnecessary leak of the light to the outside of the light transmission member 27. More specifically, the light reflection membrane 28 is provided for increasing the light transmission efficiency in a predetermined direction, increasing the luminance and strength of the light of the light source 18 for the illumination irradiated from the lens portions 27a. In this case, the light reflection membrane 28 may be provided by applying a metal with high reflection efficiency, for example chrome or silver or the like, over the outer surface of the light transmission member 27, for example by performing the vapour deposition of metal or by plating or by applying a reflective tape, for example silver tape, having a color with high reflection rate, around the light transmission member 27. Alternatively a coating (e.g., silver) with high reflection rate may be applied on internal walls of the illumination unit 8 in which the light transmission member 27 is arranged (i.e., in this case, the reflection membrane 28 is provided on the casing surrounding the light transmission member 27 rather than directly to the light transmission member 27) for increasing the light transmission efficiency in the predetermined direction.

With the foregoing construction, when the light is irradiated from the light source 18 for the illumination, the light is entered from the lens portion 27a of the light transmission member 27, a portion of the light is reflected relative to the internal portion of the light transmission member 27 by the reflection surface 27b while the light is reflected by the reflection membrane 28 provided on the surrounding to diffuse the light generated on the both sides in the light transmission member 27. Thus, the diffused light with little attenuation is projected from the reading head 7 onto the surface to be read, namely the object 30 which is provided with the code 10 as shown in Fig. 12. For the explanatory purpose, the hatching in the cross-section of the light transmission member 27 is omitted from Fig. 12.

A back plate 8a of the illumination unit 8 is formed with a bore 8b which acts as an optical aperture relative to a CCD element for imaging an image of a CCD camera 95. The back plate 8a of the illumination unit 8 is formed with rectangular configured slit bores 8c, 8c one on each side of the bore 8b in the Z-direction for, for example, irradiating the light relative to the surface to be read for reading the code 10 by a marker light source (marker LED) 94 for generating red colored light. An optical unit 9 including a lens group 91 having plural lenses arranged on a common optical axis is provided on the inner part of the back plate 8a. The optical unit 9 is fixed with the illumination unit 8 by tightening members, for example a screw or the like, on the back surface of the illumination unit 8.

The optical unit 9 having the cubic configuration may be made of resin. The optical unit 9 is formed with a lens bore 92 arranged with the lens group 91 in the X-direction and two light source bores 93. Each marker light source 94 is positioned in the optical bore 93 respectively. In this case, the optical axis X of the lens group 91 and the CCD camera 95 are identical.

The back surface of the optical unit 9 may have a concave configuration as shown in Fig. 4. The CCD camera 95 having a CCD element therein may be provided in the concave portion. An optical board 11 mounted with the CCD camera 95 on the surface may be fixed to the optical unit 9 with tightening members, such as screws or the like, (not shown) from the back surface of the optical board 11 as shown in Fig. 2. The marker light source 94 for generating the light for indicating the reading position when reading the code from two positions may be attached to the optical board 11. The optical board 11 may be mounted with the electronic parts such as a chip shaped transistor, resistors, and a condenser for constructing a drive circuit and detection circuit of the CCD camera 95 and a driver circuit for driving the marker light source 94. The optical board 11 illuminates the marker light source 94 and outputs a detection signal regarding the code reading from the image imaged on the CCD element by driving the CCD camera 95. The optical board 11 may be connected with a harness configured to be electrically connected with a main board 21. The detection signal related to the code reader from the optical board 11 is transmitted to the main board 21, and the signal from the main board 21 drives the marker light source 94 and the CCD camera 95.

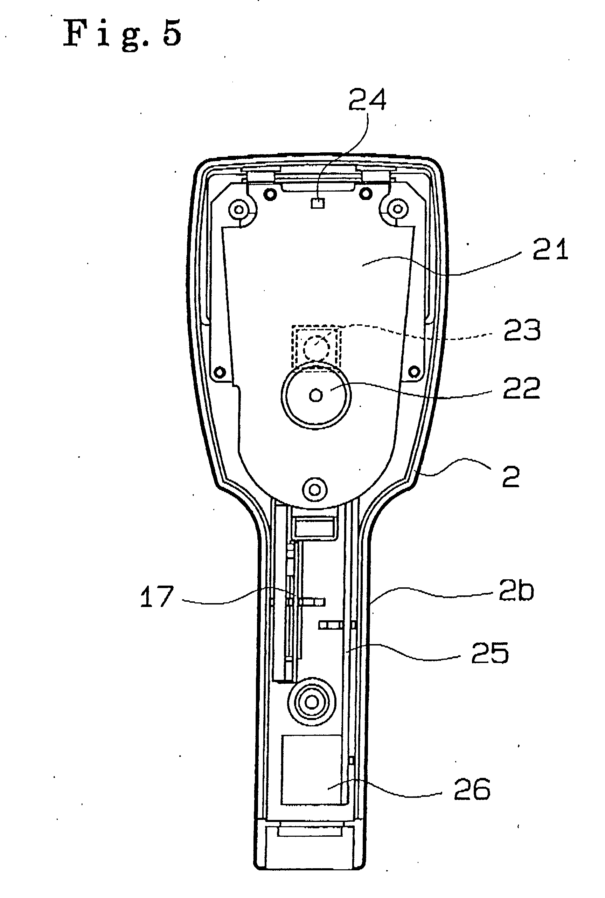

As shown in Figs. 2 and 5, the main board 21 is positioned on the rearmost surface of the housing part 2 for controlling the code reading of the coder reader 1. A voltage buzzer 22 and a light source 24 for confirmation (i.e., green LED for confirmation) 24 for visually indicating the completion of the reading are mounted on the rearmost side of the main board 21 by soldering or the like. A contact switch 23 is mounted on the other side of the main board 21 by soldering or the like. Further, the main board 21 may include chip shaped electronic parts such as transistors, resistors, and condensers on both surfaces thereof and may include a decode circuit for decoding a detection signal by the CCD element from the optical board 11, a drive circuit for driving the voltage buzzer 22, and a drive circuit for driving the light source 24 for the confirmation for confirming the reading.

Further, a central processing unit (CPU) (not shown) for controlling the code reading of the code reader 1 and a memory (not shown) for tentatively storing the information regarding the code reading may be mounted on the surface of the main board 21 on an optical board side. The main board 21 may be electrically connected to the opposingly arranged optical board 11 via, e.g., a flat cable. In the main board 21, the code 10 read by the CCD camera 95 may be decoded by a decode circuit (not shown) therein. The decoded signal may be transmitted to an interface board 25 provided in the grip portion 2b shown in Fig. 2.

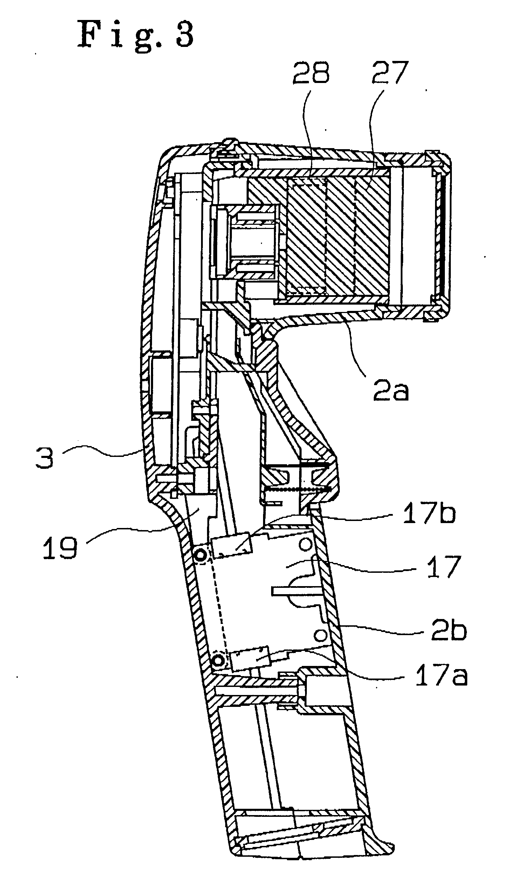

The signal for driving the light source 18 for the illumination provided in the illumination unit 8 may be driven by a light source drive board 17 for the illumination provided in the grip portion 2b as shown in Fig. 3. In this case, the light source drive board 17 for the illumination is driven by the direction from the main board 21.

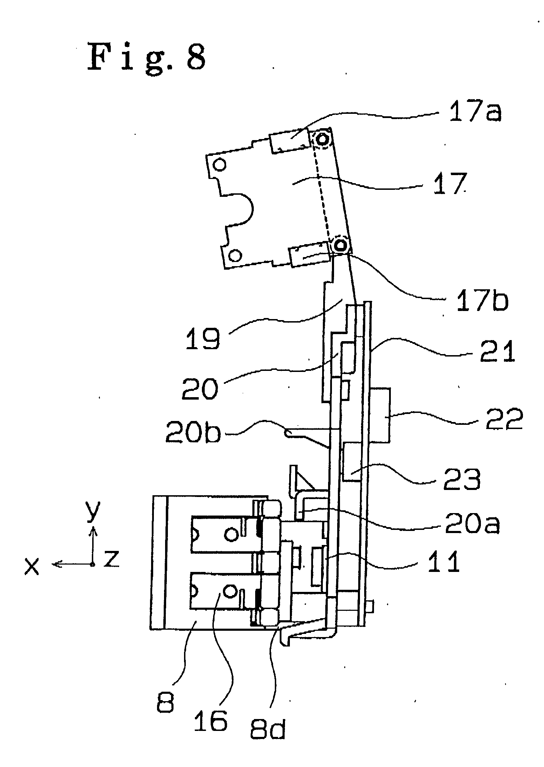

The main board 21, the optical board 11, the optical unit 9, and the illumination unit 8 are formed as one unit by, for example, a resin-made holder 20 as shown in the non-limiting illustration of Fig. 8. The holder 20 may be provided being positioned at a predetermined position of the first housing part 2 from the back surface of the first housing part 2 to be fixed to the first housing via four tightening members, such as screws or the like. The holder 20 may be extended in the Y-direction. A rectangular detent bore may be unitarily formed on the holder 20 on an end portion of the holder 20 corresponding to the top of the reader (i.e., bottom side in Fig. 8). An L-shaped craw portion 8d formed on the top of the reader of the illumination unit 8 may be detained in the detent bore. The position of the illumination unit 8 may be determined at a predetermined position of the holder 20. In order to contact the back surface of the illumination unit 8 to the holder 20 to fix thereon, an L-shaped mounting portion 20a for fixing the illumination unit 8 may be unitarily formed on the holder 20 on an end portion thereof, opposite to a claw portion 8d on an illumination unit top end. The tightening members, e.g., screws, may be applied to the mounting portion 20a from the back surface side of the holder 20 to fix the illumination unit 8 on the holder 20 on the reader topside.

One end of a holder 19 may be fixed to an end portion of the bottom side (i.e., top of Fig. 8) of the holder 20 via two tightening members such as screws or the like. The light source drive board 17 for driving the illumination having the driver circuit that may be mounted with the electronic parts such as the resistors and the transistors on the surface and for driving the light source 18 for the illumination may be fixed to the other end of the holder 19 with two tightening members, such as screws in the Y-direction as shown in Fig. 8. Thereafter, the light source drive board 17 for the illumination is positioned in the internal space of the grip portion 2b of the code reader 1 to be fixed to the housing part 2 by the tightening members such as screws or the like on X-Y surface. The light source drive board 17 for the illumination includes two connectors 17a, 17b on both end portions thereof in the Y-direction. The connector 17a is connected to an external connector which is connected to the main board 20 via a harness (not shown). Thus, a light source drive signal for driving the light source 18 for the illumination is output from the main board 21 to drive the light source 18 for the illumination by flashing or turning on the light source 18 for the illumination for performing the read based on the output signal.

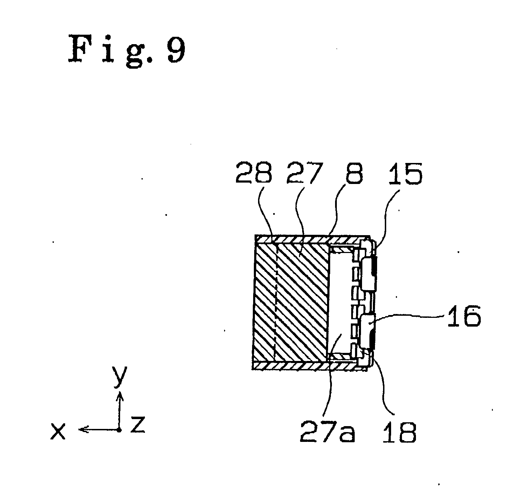

The internal construction of the illumination unit 8 will be explained with reference to Figs. 4 and 9. As shown in Fig. 4, the illumination unit 8 is provided on the back surface of the reading portion 7. As shown in Fig. 7, a light source boards 15 for the illumination including a plurality of light sources 18 for the illumination (e.g., 6 light sources on each side) are provided on the both sides of the back surface of the illumination unit 8 in the Z-direction. More specifically, the light source board 15 for the illumination is provided on a tapered surface relative to the tapered surface formed on the both ends of the illumination unit 8 in the Z-direction so that the light is irradiated diagonally from the lens portions 27a of the light transmission member 27 provided in the illumination unit 8 to the light axis on the CCD camera 95. The plural light sources 18 for the illumination are fixed on the back surface of the illumination unit 8 via plural pawl portions.

As shown in Fig. 8, electrically conductive terminals 16 are connected to the light source 18 for the illumination. The terminals 16 are provided along a side surface of the illumination unit 8 in the Z-direction. Further, the electrically conductive terminals 16 are electrically connected to the connector 17b of the light source drive board 17 for the illumination via a harness (not shown). Thus, by providing the light source drive signal from the main board 21, the light source 18 for the illumination can be turned on or flashed with a predetermined cycle when operating the code reading.

On the other hand, a switch operation portion 20b may be projected in the X-direction on the middle portion of the holder 20 extended in the Y-direction. The switch operation portion 20b may be unitarily formed with the holder 20 while being movable in the X-direction. When the illumination unit 8 is unitarily provided (i.e., under subassembly state), the switch operation portion 20b may be projected in the X-direction perpendicularly from the holder 20 as shown in Fig. 8. With the foregoing construction, the contact switch 23 may be pushed by the back surface of the switch operation portion 20b when the switch operation portion 20b is operated and thus the turning on and the turning off of the contact switch 23 is performed. In this case, the code 10 may be read by the code reader 1 when the contact switch 23 is ON and the reading of the code 10 is prohibited when the contact switch 23 is OFF.

The operation of the operation lever 31 will be explained as follows. When the user grabs the grip portion 2b, the operation lever 31 may be operated using a finger. The operation lever may be pushed to rotate in the counterclockwise direction of Fig. 2 about a fulcrum 31 b positioned around a base of the hood portion 2a. In this case, the code reader 1 is formed with a recess portion 2c having a surface extended in the γ-direction on a portion of the housing part 2 opposing to the operation lever 31 so that the operation lever 31 becomes rotatable at the operation. A projection 2d projecting in the X-direction is formed unitarily on a portion of the recess portion 2c of the housing part 2.

On the other hand, a concave portion 31 a for detaining one end of a spring 13 may be formed on a back surface corresponding to the projection 2d of the operation lever 31. The spring may be provided between the concave portion 31 a formed on the operation lever 31 and the projection 2d formed on the housing part 2. A flange 31c extended in the Y-direction may be unitarily formed on the operation lever 31 on an end portion opposite to the fulcrum 31b of the operation lever 31. The flange 31c may extend along the configuration of the grip portion 2b from the grip portion 2b of the housing part 2. The rotation of the operation lever 31 may be restricted by a restriction portion 2f covering a portion of the concave portion 2c of the housing part 2. Thus, the operation lever 31 may be rotated until the back surface of the operation lever 31 contacts an apex of the projection 2d when the operation lever 31 is rotated in the counterclockwise direction shown in Fig. 2 about the fulcrum 31 b against the biasing force of the spring 13. The switch contact portion 20b may contact the back surface. When the operation lever 31 is operated to rotate the operation lever 31 in the counterclockwise direction, the switch operation portion 20b is pushed. Accordingly, the contact switch 23 is turned on and the switch signal from the contact switch 23 is input into the CPU of the main board 21.

On the other hand, when the force is not applied to the operation lever 31 after operation thereof, the operation lever 31 is rotated in the clockwise direction of Fig. 2 about the fulcrum 31 b by the biasing force of the spring 13. Thereafter, the flange 31 c formed on one end of the operation lever 31 may contact the restriction portion 2f of the housing part 2 to restrict the further rotation of the operation lever 31 in the clockwise direction. As forgoing, when the rotation of the operation lever 31 in the counterclockwise direction is canceled, the pushing pressure to the contact switch 23 by the switch operation portion 20b is canceled. Thus, the contact switch 23 becomes OFF and the switch signal thereof is input into the CPU.

The connection between the code reader 1 and external device 40 will be explained as follows. As shown in the non-limiting illustration of Fig. 5, the interface board (i.e., I/F board) 25 may be fitted into a slit formed on a back surface of the housing part 2 to be mounted opposing the drive board 17, while keeping a predetermined distance relative to the driver board 17 in the grip portion 2b of the code reader 1. The interface board 25 may be electrically connected to the main board 21 via a cable (e.g., a flat cable, a harness or the like, not shown). A connector 26 may be fixed to an end of the I/F board 25 on the bottom portion of the reader. The I/F board 25 also includes a power source circuit for supplying a constant direct current (e.g., 5V) relative to the plural boards of the code reader 1 therein. A circuit on the I/F board 25 supplies a stable predetermined power (e.g., 5V) to the main board 21. In case the external connector is connected to the connector 26, the data of the signal (e.g., decoded signal of the code 10 detected by the CCD camera 95) regarding the reading of the code may be sent to and received by the external device (e.g., code control device having the display function or the code analysis device) 40 connected via the connector 26. With the foregoing construction, for example, the reading signal of the code 10 decoded from a decode circuit may be output from the external device 40 to the code reader 1 and the reading signal may be sent to the external device 40.

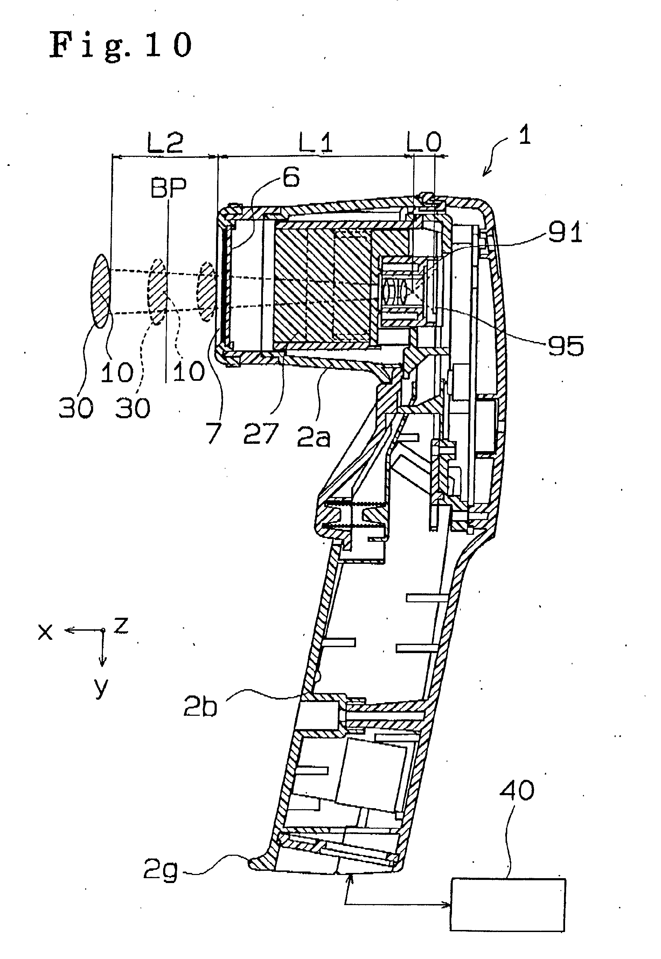

The operation of the code reader 1 will be explained with reference to Fig. 10 as follows. The code reader 1 enables to read the code 10 by directly contacting the reading portion 7 to the object 30 provided with the code or the code 10 indicating the two-dimensional unique information and by keeping a distance from the surface 7 to be read without the contact to the code 10 or to the object 30 provided with the code 10. The user performing the reading of the code 10 holds the grip portion 2b of the code reader 1 and positions the code reader 1 at the position that the reading portion 7 is over the two-dimensional code 10. When the user pulls the operation lever 31 against the biasing force of the spring 13 from the position, the operation lever 31 rotates about the fulcrum 31 b in the counterclockwise direction shown in Fig. 2. By this operation, the switch operation portion 20b may be pushed by the back surface of the operation lever 31. Accordingly, the switch operation portion 20b may move in the X-direction, the contact switch 23 provided on the back surface of the switch operation portion 20b is pushed by the movement of the switch operation portion 20b to be ON state. When the contact switch 23 is ON, the signal indicating the ON state of the contact switch 23 may be recognized as a trigger for starting the reading by the CPU (not shown) in the main board 21. The information indicated by the code 10 may be read in the foregoing manner. Under the state that the contact switch 23 is ON, the main board 21 is configured to simultaneously output the drive signal for driving the indirect illumination luminance 18 and the marker light source 94 to the light source drive board 17 for the illumination and the optical board 11. With the light source drive signal, a pair of the light sources 18 for the illumination provided on the right and left sides of the opening of the illumination unit 8 may be simultaneously lighted or flashed, if desired. And the light is entered from the lens portion 27a of the light transmission member 27.

The light entered to the lens portion 27a (i.e., the red colored light having a predetermined irradiation angle) is introduced to the reading portion 7 for reading the code 10 without causing the attenuation while being reflected on the reflection surface 27b formed on a portion of the light transmission member 27 and being reflected on the light reflection membrane 28 provided surrounding the light transmission member 27 in the transparent light transmission member 27.

Thus, a predetermined amount of the diffusion light which is not high quantity of light is generated from the reading portion 7 relative to the surface to be read to illuminate the surface to be read. Accordingly, broad light which illuminates the entire illumination unit can be created. In this case, the main board 21 simultaneously drives the marker light source 94 provided on the both sides of the CCD camera 95.

The red colored light generated from the marker light source 94 passes through the slit apertures 8c, 8c formed on the back plate 8a of the back surface of the illumination unit 8 and the light transmission member 27 to irradiate the diffusion light to the object 30 provided with the code 10 from the reading portion 7. The light contacting the code 10 is reflected depending on the condition of the brightness of the code 10 or the roughness condition of the code 10 to enter the central aperture 8b of the illumination unit 8 having the diaphragm function via the light transmission member 27. The light entered into the central aperture 8b is imaged on the CCD element of the CCD camera 95 via the lens group 91. During the transmission process of the light, the reflective light reflected by contacting the code 10 transmits through the light transmission member 27. In this case, by passing through the light transmission member 27, the light is refracted by the lens effect of the light transmission member 27. Thus, the image of the code 10 based on the reflection light is enlarged by the light transmission member 27 to be imaged on the CDD element of the CCD camera 95. The light transmission member 27 is used for the diffusion effect when the light is generated and is also utilized for the lens effect when receiving the light.

The signal detected by the CCD element of the CCD camera 95 is transmitted to the main board 21. The detection signal is decoded depending on the strength of the reflection light by the decode circuit in the main board 21 and the decoded signal is transmitted to the I/F circuit 25. Thereafter, the decoded signal is transmitted from the connector 26 provided on the I/F circuit 25 to the external device 40. The external device 40 controls the multiple numbers of the object 30 by displaying the read two-dimensional code 10 on a display of the external device if required and by analyzing the information indicated by the code 10 based on the detected signal by the CCD camera 95.

The optical reading distance of the code reader 1 with the foregoing construction will be explained with reference to Fig. 10 as follows. With the non-limited embodiment of the present invention, the CCD camera 95 is fixed on the optical board 11 assembled on the back surface of the optical unit 9. With the construction shown in Fig. 10, the light axis X of the CCD camera 95 and the light axis X of the lens group 91 including the plural lens therein are identical. Provided that a distance between the CCD camera 95 and a camera focus point is determined as a distance L0 and a distance between the focus point and a tip end of the reading portion 7 is determined as a distance L1, an adjusting member 12 is provided between the hood portion 2a and the hood cover 5 for maintaining a light permeable board 6 functioning as the optical filter so that the distance L1 corresponds to a minimum recognition distance for recognizing the object to be read (i.e., two-dimensional code) on the surface to be read and for imaging the image on the CCD element of the CCD camera 95. The minimum recognition distance may be otherwise replaced by a distance subtracting a predetermined value from the minimum recognition distance (i.e., minimum recognition distance - predetermined value) or a distance added with a predetermined value to the minimum recognition distance (i.e., minimum recognition distance + predetermined value). The predetermined value may be determined as several millimeters considering the tolerance of the CCD element, the assembling tolerance of the CCD element, the assembling tolerance of the optical board 11 and the holder 20, the tolerance of the lens group 91, the tolerance of the lens group 91 and the holder 20, and the accumulated tolerance such as the accumulated tolerance of the holder 20 and the optical board 11.

In other words, the reading operation of the code reader 1 can be easily performed by the user who is not familiar with the operation thereof by contacting the reading surface of the code reader 1 on the code 10. In this case, by slightly projecting an end portion 2g of the grip portion 2b of the code reader 1 in the X-direction, the reading operation of the code 10 can be performed only by the operation of the operation lever 31 without holding the code reader 1 while contacting both the end portion 2g of the grip portion 2b and the end portion of the reading portion 7 to either to the object 30 or a base provided with the object 30. Even when the reading operation is performed by keeping a predetermined distance between the reading portion 7 and the code 10, the image capturing is performed by the CCD camera 95 by generating the diffusion light by the light transmission member 27 before entering the reflection light to the CCD camera 95 in the illumination unit 8. Thus, for example, even when the code 10 is provided on the object with a mirror surface, the reading can be performed without causing the saturation of the CCD element by providing the light transmission member 27 between the CCD camera 95 and the reading portion 7. Accordingly, the reading of the code 10 can be performed even when receiving the light by the disturbance.

On the other hand, when reading is performed keeping the distance between the code 10 and the coder reader 1, because the positional relationship with the camera focus point is determined with the minimum recognition distance L1, one of zero points in the recognition range by CCD element is to be determined. Thus, a recognizable region L2 can be maximally obtained to a position of the maximum recognition distance, which makes the recognition of the code 10 easy during the operation. In this case, an optimum focus position BP is positioned between the minimum recognition distance and the maximum recognition distance (intermediate position between the minimum recognition distance and the maximum recognition distance). Accordingly, the colored light from the light source 18 for the illumination may be arranged to cross with the optimum focus point distance BP at an intersection of the X-Y plane including the central axis from CCD camera. Thus, because the user can easily recognize the optimum reading position of the code reader 1 relative to the code 10 by the strength and the expansion of the light source 18 for the illumination, the reading of the code 10 can be performed easily.

By removing the adjusting member 12 used for determining the minimum recognition distance L1 with the foregoing construction for directly covering the hood cover 5 on the hood portion 2a as shown in Fig. 12, the recognition distance for performing the code recognition can be further obtained by the thickness of the adjusting member 12 in the X-direction than the recognition distance L2 shown in Fig. 10. This enlarges the recognizable distance.

In this case, when the reading operation is performed accurately, the voltage buzzer 22 may be operated and a light source 24 (Fig. 5) for confirming the reading may be turned on by the main board 21. This enables for the user to easily recognize the accurate reading of the code 10 by the code reader 1.

According to the non-limiting embodiment as foregoing, because the code reader 1 can obtain the lens effect by the light transmission member 27, the recognizable range at the surface to be read on which the code recognition is performed can be widen compared to the case that the light transmission member 27 is not provided in the illumination unit.

Although the transparent light transmission member 27 is applied with the foregoing non-limiting embodiment of the code reader of the present invention, the light transmission member 27 is not limited to the forgoing construction. For example, the light transmission member 27 may have some colors to the extent which does not largely decline the light permeability of the light transmission member 27 as long as the light transmission member 27 is entered with the light, the light is reflected in the light transmission member 27, and the light is introduced to the surface to be read.

Further, although the light transmission member 27 obtained by cutting and by grinding the surface thereof is applied in the non-limiting embodiment, the resin molded light transmission member 27 may be applicable. Furthermore, the light transmission member 27 can have the lens effect by injecting the liquid such as alcohol and the water or the like in the light transmission member 27 without using the glass or the resin or the like. In this case in order to reduce the weight of the light transmission member 27, the light transmission member 27 made of acrylic resin may be applied.

According to the embodiment of the present invention, because the light transmission member for introducing the light generated by means for illuminating and diffused therein is provided between means for image capturing and the reading portion, the light generated by the means for illuminating is diffused in the light transmission member, the diffused light is introduced to the reading portion, and the surface to be read can be effectively illuminated with the diffused light.

As a result, the reading of the unique code can be performed by the reflection light contacting the unique code. Because the high luminance light is not entered into the means for image capturing by the light transmission member, the reading of the unique code provided on the mirror surface is performed with a simple construction by providing the light transmission member between the means for image capturing and the reading portion.

In this case, the light transmission member includes the curved configured lens portion and by entering the light from means for illumination to the lens portion with the curved configuration, the entered light can be effectively diffused into the light transmission member by the lens portion with the curved configuration.

By forming the lens portion on the both ends of the light transmission member and by crossing the light from means for illuminating to the light axis of means for image capturing, the irradiation range of the surface to be read can be increased because the light entered with the light of the means for illuminating from the lens portion of the both ends of the light transmission member can irradiate the surface to be read with an extent from the reading portion.

Further, by providing the reflection surface for diffusing the light by reflecting the generated light from the means for illuminating to the inside of the light transmission member in the light transmission member, the light from the means for illuminating contacting the reflection surface is reflected on the inside of the light transmission member to easily produces the diffused light therein.

Still further, because the light transmission member can capture the image of the unique code based on the reflection light on the means for image capturing by enlarging the image of the unique code by the refraction of the light, the image of the unique code based on the reflected light captured by the means for image capturing can be easily recognized as code.

The light transmission member can effectively introduce the light to the reading portion without leaking the light to the outside by providing the light reflection membrane for preventing the leakage of the light other than the surface opposing to the reading portion and the means for image capturing on the light transmission member because the surfaces other than the surface opposing to the reading portion and the means for image capturing are covered with the light reflection membrane.

By applying the transparent glass or the resin to the light transmission member, the light transmission member with less fluid distortion and with high forthrightness is achieved to effectively introducing the light to the reading portion.

In this case, when the liquid is injected in the light transmission member, the les effect can be obtained by the liquid injected therein.

Further, by applying the colored light to the means for illuminating for crossing the colored light at the focus point position of the means for image capturing, the reading position of the unique code is adjustable observing the color of the illumination only by applying the colored illumination light.

## Claims

1. A code reader comprising:
a housing (2,3); and
a code reading head on the housing (2,3) for reading a code provided on an object;
wherein the code reading head comprises:
an illumination unit (8) including illuminating means (18) within the housing (2,3) for illuminating the code; and
sensing means (95) within the housing (2,3) for capturing an image of the code from light from the illuminating means (18) that is reflected back from the code:
**CHARACTERISED IN THAT** a light transmission means (27) is provided within the illumination unit (8) for directing diffused light from the illuminating means (18) onto the code and for passing the image of the code back to the sensing means (95).

2. A code reading according to claim 1, wherein the light transmission means (27) includes a curved configured lens portion (27a) and the light from the illuminating means (18) enters the light transmission means (27) through the lens portion (27a).

3. A code reader according to claim 1 or claim 2, wherein the lens portion (27a) is formed on both sides of the light transmission member and the light from the illuminating means (18) crosses an optical axis of the sensing means (95) for capturing the image.

4. A code reader according to any of claims 1 to 3, wherein the light transmission means (27) includes a reflection surface (27b) for diffusing the light generated from the illuminating means (18) by reflecting to the inside of the light transmission means.

5. A code reader according to any of claims 1 to 4, wherein the light transmission means (27) enlarges the reflected image of the code passed back to the sensing means by refraction of the light.

6. A code reader according to any of claims 1 to 5, wherein the light transmission means (27) includes a light reflection membrane (28) configured to prevent leakage of light therefrom to the outside.

7. A code reader according to any of claims 1 to 5, wherein the light transmission means is made of transparent glass or resin.

8. A code reader according to claim 7, wherein the light transmission means is injected with liquid therein.

9. A code reader according to any of claims 1 to 8, wherein the illuminating means (18) generates coloured light which crosses a focus point of the sensing means (95).

10. A code reader according to any of claims 1 to 9, wherein the sensing means (95) is a CCD camera.
